# FASCICULE DE BREVET EUROPEEN

(11) **EP 1 548 233 B1**
(45) Date de publication et mention de la délivrance du brevet: **02.08.2006**
(21) Numéro de dépôt: 03447295.1
(22) Date de dépôt: 18.12.2003
(51) Int. Cl.: F01D 9/04, F01D 5/30

(54) **Dispositif de fixation d'aubes à une virole et étage redresseur de compresseur comportant un tel dispositif**
Befestigungsvorrichtung für Statorschaufel, sowie Leitschaufelstufe eines Verdichters mit einer solchen Vorrichtung
Fastening device for stator blades and compressor stator stage comprising such a fastening device

(43) Date de publication de la demande: 29.06.2005
(73) Titulaire: Techspace Aero S.A., 4041 Herstal (Milmort) (BE)
(72) Inventeur: Lhoest, André, 4500 Huy (BE)
(74) Mandataire: Van Malderen, Michel

(56) Documents cités:
- EP-A- 0 811 753
- FR-A- 1 095 927
- GB-A- 732 919
- GB-A- 789 733
- GB-A- 802 508
- GB-A- 865 544
- GB-A- 1 054 608
- GB-A- 1 208 507
- US-A- 4 249 859

## Description

### Objet de l'invention

La présente invention se rapporte à un dispositif pour l'assemblage des aubes statoriques d'un redresseur. L'assemblage est effectué au moyen de rivets, de soudures ou encore par vis et écrous.

### Arrière-plan technologique et état de la technique

Les compresseurs coaxiaux sont bien connus en soi, et sont utilisés dans plusieurs types d'applications. En particulier, ils sont utilisés dans les moteurs double corps, turbofans ou turboréacteurs. On note aussi leur présence dans les centrales électriques. Ces compresseurs basse ou haute pression sont essentiellement constitués de plusieurs étages d'aubes tournantes ou étages rotoriques séparés par des étages statoriques ou redresseurs qui ont pour but de repositionner (redresser) le vecteur vitesse du fluide sortant de l'étage précédent avant de l'envoyer vers le compartiment suivant.

Chacun de ces étages redresseurs est constitué essentiellement d'aubes fixes reliant une virole extérieure à une virole intérieure, toutes deux concentriques.

Un problème important dans le cas des étages redresseurs d'un compresseur est qu'il convient de solidariser de manière particulièrement efficace lesdites aubes aux viroles. En effet, cette solidarisation des aubes aux viroles doit être optimale de manière à pouvoir faire face à des accidents tels que le bris d'une aube ou les dégâts causés par l'ingestion d'un corps étranger tel qu'un oiseau dans un turboréacteur.

Habituellement, on solidarise les aubes aux viroles, tant intérieure qu'extérieure, classiquement par des rivets, des boulons (vis/écrous) ou des soudures. Néanmoins, le recours à ces moyens de solidarisation présente l'inconvénient majeur de perturber le flux et de générer une perte de charge dans la veine aérodynamique. Notamment, dans le cas du rivetage, les rivets sont habituellement placés dans la veine aérodynamique.
Le document US-A-4,249,859 décrit un bec de séparation pour réacteur à double flux qui supporte les charges en fatigue et qui ne risque pas de se désolidariser, grâce à une mise en précontrainte. Les aubes de redresseur sont fixées individuellement à la virole du bec de réparation en utilisant des pièces en équerre et des rivets qui peuvent engendrer des irrégularités dans la veine aérodynamique.
Dans le document EP-A-O 811 753, les aubes d'une turbine sont assemblées avec une virole ajourée, dans une base interne non-métallique comprenant une plate-forme et un manchon dans lequel est disposé un matériau élastomère (polyuréthane) ayant une fonction d'amortisseur.
Dans le document GB-A-802 508, on décrit un support de palier de rotor réalisé à partir d'une roue d'aubes statoriques creuses, assemblées à leurs extrémités grâce à des pièces intercalaires ayant la forme de boîtes métalliques soudées d'une part aux aubes et d'autre part, sur leurs faces amont et aval, à des jantes sous forme d'anneaux circulaires métalliques. Ceux-ci sont également soudés à la virole réalisant la veine fluide interne. Les aubes peuvent éventuellement être soudées directement à la virole. Ces boîtes métalliques intercalaires ont pour fonction de rigidifier l'assemblage aubes-jantes pour transmettre les efforts du roulement vers le carter du moteur.

### Buts de l'invention

La présente invention vise à fournir une solution de fixation des aubes statoriques aux viroles ne présentant pas les inconvénients de l'état de la technique et notamment l'altération de la veine aérodynamique par la présence de soudures ou de rivets au niveau de la virole.

En particulier, la présente invention vise à apporter une solution qui offre une grande simplicité de montage et qui ne nécessite pas d'opérations d'assemblage supplémentaires.

L'invention a encore pour but de positionner les éléments de fixation des aubes en dehors des zones fonctionnelles, pour réduire considérablement le risque d'accident.

La présente invention vise également à permettre l'adoption d'une solution d'un coût peu élevé.

### Principaux éléments caractéristiques de l'invention

La présente invention se rapporte à un dispositif de solidarisation d'une aube à une virole dans un étage redresseur d'un compresseur comprenant une virole extérieure et une virole intérieure, toutes deux concentriques et reliées l'une à l'autre par une pluralité d'aubes fixes, ladite aube traversant ladite virole grâce à un ajour pratiqué dans la virole, une partie de ladite aube se trouvant donc dans une partie non fonctionnelle du redresseur, en dehors de la veine aérodynamique, ledit dispositif de solidarisation étant situé dans ladite partie non fonctionnelle et comprenant une pièce intercalaire montée fixée de chaque côté de ladite aube à sa partie se trouvant dans la partie non fonctionnelle, au moyen d'un élément de verrouillage, chaque pièce intercalaire étant configurée pour solidariser ladite aube à une aube adjacente, caractérisé en ce que ledit dispositif de solidarisation est dépourvu de lien mécanique direct d'une part entre l'aube et la virole et d'autre part entre ladite pièce intercalaire et la virole.

Avantageusement, ladite pièce intercalaire comprend une tôle pliée constituée d'un plat et terminée à chacune de ses extrémités par au moins une patte destinée à être positionnée respectivement le long de ladite aube et de l'aube adjacente sur leur largeur, et solidarisée à celle-ci par l'élément de verrouillage.

De préférence, la pièce intercalaire est réalisée en aluminium, en acier, en titane ou en composite.

De préférence encore, pour alléger la structure, le plat de la pièce intercalaire présente des évidements ou ajours, de préférence sous forme de trous circulaires ou ovales, usinés dans la tôle.

Selon l'invention, une partie de la pièce intercalaire, de préférence le plat de la pièce intercalaire, peut être encastrée, calée ou encore noyée dans un élément élastomère au niveau de la partie non fonctionnelle de la virole.

Selon une forme d'exécution, la pièce intercalaire comprend une patte de fixation à ses deux extrémités.

Le dispositif de fixation de l'invention est donc monté en solidarisant les aubes de proche en proche.

Avantageusement, chaque patte de fixation comprend un orifice pour la pose de l'élément de verrouillage.

Selon une forme d'exécution préférée, les pattes de fixation des deux pièces intercalaires montées fixées sur une même aube sont disposées pour obtenir des points de fixation distribués de façon essentiellement uniforme sur la largeur de l'aube.

Selon une première modalité d'exécution préférée, deux points de fixation adjacents sur l'aube sont réalisés au moyen de pièces intercalaires différentes.

Avantageusement, une extrémité de la pièce intercalaire comprend deux pattes situées aux bords de l'intercalaire dans le sens de la largeur, tandis que l'autre extrémité comprend une seule patte disposée de manière centrale dans le sens de la largeur.

Selon une deuxième modalité d'exécution préférée, deux points de fixation adjacents sur l'aube sont réalisés notamment au moyen de la même pièce intercalaire.

Toujours selon cette deuxième modalité d'exécution, une extrémité de la pièce intercalaire comprend au moins deux pattes, tandis que l'autre extrémité comprend un nombre correspondant de pattes disposées de la même manière, de sorte que, au niveau de chaque point de fixation, l'aube se trouve prise en sandwich entre les pattes situées en vis-à-vis et appartenant à deux pièces intercalaires différentes.

De préférence, le nombre de pattes est alors égal à 3.

Avantageusement, l'élément de verrouillage comprend un rivet, une soudure ou un boulon, c'est-à-dire une tige filetée et un écrou.

L'invention concerne également un étage redresseur d'un compresseur comprenant une virole extérieure et une virole intérieure, de préférence circulaires et toutes deux concentriques, et reliées l'une à l'autre par une pluralité d'aubes fixes solidarisées à au moins une des viroles par un dispositif de fixation tel que décrit ci-dessus.

### Brève description des figures

La figure 1 représente schématiquement une vue en coupe, selon un plan perpendiculaire à l'axe du moteur, du mode de fixation d'une aube statorique selon l'invention, faisant usage d'intercalaires.

La figure 2 représente schématiquement une vue en coupe, dans un plan passant par l'axe du moteur, d'un exemple de fixation selon le principe de la figure 1.

La figure 3 représente schématiquement une vue du dessus d'un exemple de fixation selon le principe de la figure 1

### Description d'une forme d'exécution préférée de l'invention

Le principe de l'invention est de recourir à une technique de fixation minimale, simple, fiable et sans moyens coûteux ou sophistiqués, tout en se positionnant en dehors de la zone fonctionnelle du redresseur.

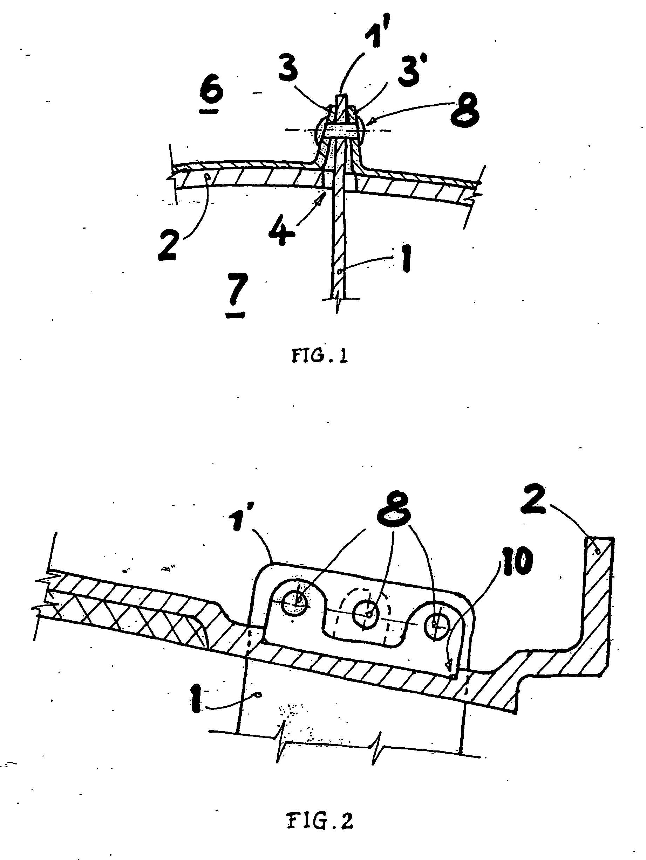

Comme représenté sur la figure 1, l'invention consiste à utiliser, comme pièces intermédiaires de la fixation entre l'aube 1 et la virole 2, un intercalaire 3, 3' qui vient se placer de chaque côté de la partie de l'aube 1' dépassant au travers d'un ajour 4 du côté non fonctionnel 6 par rapport à la veine aérodynamique 7. La fixation proprement dite 8 est alors réalisée, par exemple par rivetage ou par boulonnage, de ce côté non fonctionnel 6, entre l'intercalaire 3, 3' et l'aube 1. Les intercalaires 3, 3' sont simplement encastrés dans la virole 2. L'épaisseur de la virole et des intercalaires peut dès lors être réduite au minimum, en fonction de la faisabilité d'usinage.

La figure 2 montre un exemple où les intercalaires ont été encastrés dans une virole extérieure, avec calage assuré 10.

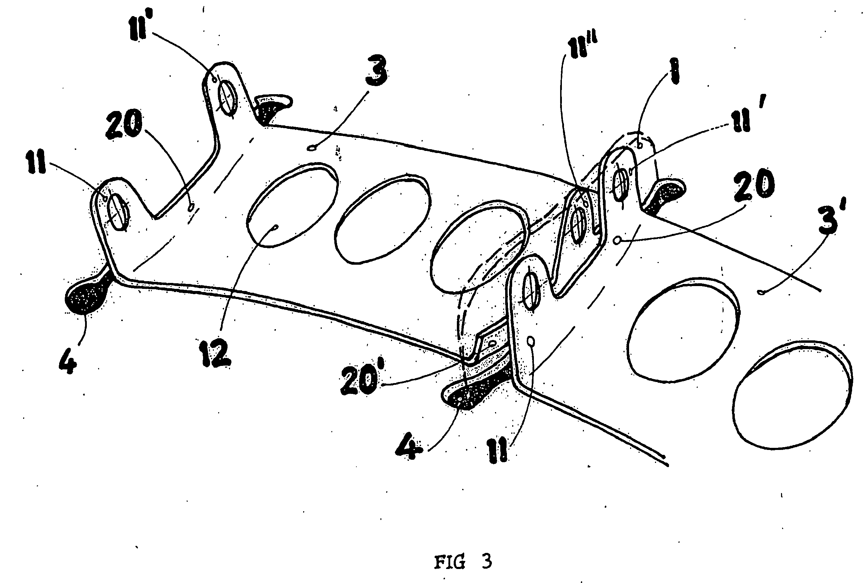

La figure 3 montre un exemple de forme d'exécution particulièrement bien adapté à une utilisation avec des viroles extérieures. Chaque intercalaire 3, 3' est réalisé en tôle d'acier pliée. Tous les intercalaires sont identiques et chaque intercalaire est muni d'une patte 11, 11', 11" à chacune de ses extrémités 20, 20', ce qui permet la fixation d'un même intercalaire à deux aubes adjacentes sur la virole. Pour favoriser la rigidité de l'assemblage, une extrémité 20 de l'intercalaire peut présenter deux pattes 11, 11' situées aux bords de l'intercalaire 3, 3' sur sa largeur tandis que l'autre extrémité 20' peut ne présenter qu'une seule patte 11" située de manière centrale par rapport à la largeur. Ainsi, au niveau de chaque aube, on a trois points de fixation 8 régulièrement répartis sur la largeur de l'aube. Les intercalaires peuvent être allégés, soit en recourant à une épaisseur minimale de tôle, soit encore en pratiquant des trous 12 dans le plat de la tôle pliée.

Un tel dispositif de solidarisation présente plusieurs avantages :
- tout d'abord, par l'absence de pièces de fixation telles que des rivets dans la veine aérodynamique, il n'entraîne aucun défaut dans celle-ci, ce qui réduit fortement les pertes de charge ;
- il est simple à réaliser et facile à monter et à démonter tout en garantissant une utilisation optimale de la matière ;
- il permet l'utilisation d'aubes de forme très simple ;
- il n'y a aucun fraisage nécessaire pour les viroles, à part les ajours pour le passage des aubes ;
- les aubes étant enfilées par l'intérieur, les ajours sont plus petits et il y a donc moins de contraintes pour le dessin aérodynamique ;
- l'épaisseur des viroles est réduite au minimum en fonction de la faisabilité d'usinage ;
- il permet enfin d'assembler et de solidariser deux types de pièces, les aubes fixes et la virole, sans lien mécanique direct, sans modification de l'aspect fonctionnel de ces deux types de pièces.

## Revendications

1. Dispositif de solidarisation d'une aube (1) à une virole (2) dans un étage redresseur d'un compresseur comprenant une virole extérieure et une virole intérieure, toutes deux concentriques et reliées l'une à l'autre par une pluralité d'aubes fixes, ladite aube (1) traversant ladite virole (2) grâce à un ajour (4) pratiqué dans la virole, une partie de ladite aube (1') se trouvant dans une partie non fonctionnelle du redresseur (6), en dehors de la veine aérodynamique (7), ledit dispositif de solidarisation étant situé dans ladite partie non fonctionnelle (6) et comprenant une pièce intercalaire (3, 3') montée fixée de chaque côté de ladite aube à sa partie (1') se trouvant dans la partie non fonctionnelle (6), au moyen d'un élément de verrouillage (8), chaque pièce intercalaire (3, 3') étant configurée pour solidariser ladite aube (1) à une aube adjacente, **caractérisé en ce que** ledit dispositif de solidarisation est dépourvu de lien mécanique direct d'une part entre l'aube (1) et la virole (2) et d'autre part entre ladite pièce intercalaire (3, 3') et la virole (2).

2. Dispositif de solidarisation selon la revendication 1, **caractérisé en ce que** ladite pièce intercalaire (3, 3') comprend une tôle pliée constituée d'un plat et terminée à chacune de ses extrémités (20, 20') par au moins une patte (11, 11', 11") destinée à être positionnée respectivement le long de ladite aube (1')et de l'aube adjacente, sur leur largeur, et solidarisée à celle-ci par l'élément de verrouillage (8).

3. Dispositif de colidarisation selon la revendication 2, **caractérisé en ce que** la pièce intercalaire (3, 3') est réalisée en aluminium, en acier, en titane ou en composite.

4. Dispositif de solidarisation selon la revendication 2 ou 3, **caractérisé en ce que** le plat de la pièce intercalaire présente des évidements ou ajours, de préférence sous forme de trous circulaires ou ovales, usinés dans la tôle.

5. Dispositif de solidarisation selon l'une quelconque des revendications 2 à 4, **caractérisé en ce qu'**une partie de la pièce intercalaire (3, 3'), de préférence le plat de la pièce intercalaire (3, 3'), est encastrée, calée ou encore noyée dans un élément élastomère au niveau de la partie non fonctionnelle de la virole (2).

6. Dispositif de solidarisation selon l'une quelconque des revendications 2 à 5, **caractérisé en ce que** chaque patte de fixation (11, 11', 11") comprend un orifice pour la pose de l'élément de verrouillage (8).

7. Dispositif de solidarisation selon la revendication 6, **caractérisé en ce que** les pattes de fixation (11, 11', 11") des deux pièces intercalaires (3, 3') montées fixées sur une même aube (1') sont disposées pour obtenir des points de fixation distribués de façon essentiellement uniforme sur la largeur de l'aube.

8. Dispositif de solidarisation selon la revendication 7, **caractérisé en ce que** deux points de fixation adjacents sur l'aube (1) sont réalisés au moyen de pièces intercalaires différentes (3, 3').

9. Dispositif de solidarisation selon la revendication 7 ou 8, **caractérisé en ce qu'**une extrémité (20) de la pièce intercalaire (3, 3') comprend deux pattes (11, 11') situées aux bords de l'intercalaire dans le sens de la largeur, tandis que l'autre extrémité (20') comprend une seule patte disposée de manière centrale dans le sens de la largeur.

10. Dispositif de solidarisation selon la revendication 7, **caractérisé en ce que** deux points de fixation adjacents sur l'aube (1) sont réalisés au moyen de la même pièce intercalaire (3, 3').

11. Dispositif de solidarisation selon la revendication 10, **caractérisé en ce qu'**une extrémité (20) de la pièce intercalaire (3, 3') comprend au moins deux pattes (11, 11'), tandis que l'autre extrémité (20') comprend un nombre correspondant de pattes (11, 11') disposées de la même manière, de sorte que, au niveau de chaque point de fixation, l'aube se trouve prise en sandwich entre les pattes situées en vis-à-vis et appartenant à deux pièces intercalaires différentes.

12. Dispositif de solidarisation selon la revendication 11, **caractérisé en ce que** le nombre de pattes (11, 11') est égal à 3.

13. Dispositif de solidarisation selon l'une quelconque des revendications précédentes, **caractérisé en ce que** l'élément de verrouillage (8) comprend un rivet, une soudure ou un boulon, c'est-à-dire une tige filetée et un écrou.

14. Etage redresseur d'un compresseur comprenant une virole extérieure et une virole intérieure, toutes deux concentriques, et reliées l'une à l'autre par une pluralité d'aubes fixes solidarisées à au moins une des viroles par un dispositif selon l'une quelconque des revendications précédentes.

## Claims

1. Device for fixing a blade (1) to a collar (2) in a guide vane stage of a compressor comprising an outer collar and an inner collar, both concentric and connected to each other by a series of fixed blades, said blade (1) passing through said collar (2) by an opening (4) made in the collar, one portion of said collar (1') being located in a non-functional part of the guide vane stage (6) outside the aerodynamic stream (7), said fixing device being located in said non-functional part (6) and comprising an intercalating piece (3,3') fixed on either side of said blade on its portion (1') located in the non-functional part (6), by means of a locking element (8), each intercalating piece (3,3') being configured so as to fix said blade (1) to an adjacent blade, **characterised in that** said fixing device is devoid of any direct mechanical connection either between the blade (1) and the collar (2) or between said intercalating piece (3,3') and the collar (2).

2. Fixing device according to Claim 1, **characterised in that** said intercalating piece (3,3') comprises a folded sheet comprising a plate and terminated at both its ends (20,20') by at least one flap (11,11',11") intended to be positioned along said blade (1') and the adjacent blade across their width and fixed to the latter by the locking element (8), respectively.

3. Fixing device according to Claim 2, **characterised in that** the intercalating piece (3,3') is made of aluminium, steel, titanium or a composite.

4. Fixing device according to Claim 2 or 3, **characterised in that** the plate of the intercalating piece has perforations or openings, preferably in the form of round or oval holes, machined into the sheet.

5. Fixing device according to any one of Claims 2 to 4, **characterised in that** one portion of the intercalating piece (3,3'), preferably the plate of the intercalating piece (3,3') is recessed into, wedged or even embedded in an elastomer element at the level of the non-functional part of the collar (2).

6. Fixing device according to any one of Claims 2 to 5, **characterised in that** each fixation flap (11,11',11") comprises an aperture for locating the locking element (8).

7. Fixing device according to Claim 6, **characterised in that** the fixation flaps (11,11',11") of both attached intercalating pieces (3, 3') fixed to a same blade (1') are arranged so as to provide fixation points essentially uniformly distributed across the width of the blade.

8. Fixing device according to Claim 7, **characterised in that** two adjacent fixation points on the blade (1) are formed by means of different intercalating pieces (3,3').

9. Fixing device according to Claim 7 or 8, **characterised in that** one end (20) of the intercalating piece (3,3') comprises two flaps (11, 11') located on the edges of the intercalating piece across its width, whereas the other end (20') comprises a single flap centrally located across its width.

10. Fixing device according to Claim 7, **characterised in that** two adjacent fixation points on the blade (1) are formed by means of the same intercalating piece (3,3').

11. Fixing device according to Claim 10, **characterised in that** one end (20) of the intercalating piece (3,3') comprises at least two flaps (11,11') whereas the other end (20') comprises a corresponding number of flaps (11,11') similarly arranged so that, at each fixation point, the blade finds itself sandwiched between the opposite flaps belonging to two different intercalating pieces.

12. Fixing device according to Claim 11, **characterised in that** the number of flaps (11,11') is equal to 3.

13. Fixing device according to any one of the preceding claims, **characterised in that** the locking element (8) is a rivet, a weld or a bolt, i.e. a threaded rod and a nut.

14. Guide vane stage of a compressor comprising an outer collar and an inner collar, both concentric and connected to each other by a series of fixed blades attached to at least one of the collars by a device according to any one of the preceding claims.

## Patentansprüche

1. Vorrichtung zur Verbindung einer Schaufel (1) mit einem Ring (2) in einem Leitapparat eines Verdichters, der einen Außenring und einen Innenring umfasst, die beide konzentrisch sind und die durch eine Reihe Leitschaufeln miteinander verbunden sind, wobei die besagte Schaufel (1) durch einen in dem besagten Ring (2) befindlichen Ausschnitt (4) durch den Ring geführt wird; ein Teil der besagten Schaufel (1') befindet sich in einem nicht funktionalen Bereich des Leitapparats (6) außerhalb des aerodynamischen Strahls (7), und die besagte Verbindungsvorrichtung befindet sich im besagten nicht funktionalen Bereich (6) und umfasst ein Zwischenelement (3, 3'), das mittels eines Verriegelungselements (8) auf jeder Seite der besagten Schaufel in dem Bereich (1'), der sich im nicht funktionalen Bereich (6) befindet, befestigt ist, wobei jedes Zwischenelement (3, 3') so gestaltet ist, dass es die besagte Schaufel (1) mit einer benachbarten Schaufel verbindet, **dadurch gekennzeichnet, dass** die besagte Verbindungsvorrichtung keine direkte mechanische Verbindung zwischen der Schaufel (1) und dem Ring (2) einerseits und zwischen dem besagten Zwischenelement (3, 3') und dem Ring (2) andererseits aufweist.

2. Verbindungsvorrichtung nach Anspruch 1, **dadurch gekennzeichnet, dass** das besagte Zwischenelement (3, 3') ein aus einem Flachprofil bestehendes, gebogenes Blech ist, das an jedem seiner Enden (20, 20') in wenigstens einer Lasche (11, 11', 11") endet, die dazu bestimmt ist, jeweils entlang der besagten Schaufel (1') und der benachbarten Schaufel über deren Breite positioniert zu werden und mit dieser durch das Verriegelungselement (8) verbunden zu werden.

3. Verbindungsvorrichtung nach Anspruch 2, **dadurch gekennzeichnet, dass** das Zwischenelement (3, 3') aus Aluminium, Stahl, Titan oder einem Verbundmaterial hergestellt wird.

4. Verbindungsvorrichtung nach Anspruch 2 oder 3, **dadurch gekennzeichnet, dass** das Flachprofil des Zwischenelements Aussparungen aufweist, vorzugsweise in Form runder oder ovaler Löcher, die in das Blech eingearbeitet sind.

5. Verbindungsvorrichtung nach einem der Ansprüche 2 bis 4, **dadurch gekennzeichnet, dass** ein Teil des besagten Zwischenelements (3, 3'), vorzugsweise das Flachprofil des besagten Zwischenelements (3, 3') im nicht funktionalen Bereich des Rings (2) in ein Elastomerteil eingebettet, geklemmt oder versenkt ist.

6. Verbindungsvorrichtung nach einem der Ansprüche 2 bis 5, **dadurch gekennzeichnet, dass** jede Befestigungslasche (11, 11', 11'') eine Öffnung zur Montage des Verriegelungselements (8) aufweist.

7. Verbindungsvorrichtung nach Anspruch 6, **dadurch gekennzeichnet, dass** die Befestigungslaschen (11, 11', 11") der beiden Zwischenelemente (3, 3'), die auf ein- und derselben Schaufel (1') befestigt sind, so angeordnet sind, dass man im wesentlichen einheitlich über die Breite der Schaufel verteilte Befestigungspunkte erhält.

8. Verbindungsvorrichtung nach Anspruch 7, **dadurch gekennzeichnet, dass** zwei benachbarte Befestigungspunkte auf der Schaufel (1) mittels verschiedener Zwischenelemente (3, 3') realisiert werden.

9. Verbindungsvorrichtung nach Anspruch 7 oder 8, **dadurch gekennzeichnet, dass** ein Ende (20) des Zwischenelements (3, 3') zwei Laschen (11, 11') umfasst, die sich entlang der Breite am Rand des Zwischenelements befinden, während das andere Ende (20') eine einzige Lasche aufweist, die entlang der Breite zentral angeordnet ist.

10. Verbindungsvorrichtung nach Anspruch 7, **dadurch gekennzeichnet, dass** zwei benachbarte Befestigungspunkte auf der Schaufel (1) mittels des gleichen Zwischenelements (3, 3') realisiert werden.

11. Verbindungsvorrichtung nach Anspruch 10, **dadurch gekennzeichnet, dass** ein Ende (20) des Zwischenelements (3, 3') mindestens zwei Laschen (11, 11') umfasst, während das andere Ende (20') die gleiche Anzahl an Laschen (11, 11') aufweist, die in der gleichen Weise angeordnet sind, so dass sich die Schaufel an jedem Befestigungspunkt in Sandwichform zwischen den gegenüberliegenden Laschen zweier unterschiedlicher Zwischenelemente befindet.

12. Verbindungsvorrichtung nach Anspruch 11, **dadurch gekennzeichnet, dass** die Anzahl der Laschen (11, 11') 3 beträgt.

13. Verbindungsvorrichtung nach einem der vorstehenden Ansprüche, **dadurch gekennzeichnet, dass** das Verriegelungselement (8) ein Niet, eine Schweißnaht oder einen Bolzen, d.h. einen Gewindestift und eine Mutter, umfasst.

14. Leitapparat eines Verdichters, der einen Außenring und einen Innenring umfasst, die beide konzentrisch sind und die durch eine Reihe Leitschaufeln miteinander verbunden sind, die mit mindestens einem der beiden Ringe durch eine Vorrichtung nach einem der vorstehenden Ansprüche verbunden sind.
